Europäisches Patentamt

European Patent Office

Office européen des brevets

(11) Veröffentlichungsnummer: **0 272 345 B1**

# EUROPÄISCHE PATENTSCHRIFT

(45) Veröffentlichungstag der Patentschrift: **15.05.91**

(51) Int. Cl.⁵: **B23Q 15/10**

(21) Anmeldenummer: **86118060.2**

(22) Anmeldetag: **24.12.86**

(54) **Verfahren und Einrichtung zur Beeinflussung der Bewegung eines beweglichen Organs, insbesondere eines Werkzeugträgers.**

(43) Veröffentlichungstag der Anmeldung:
**29.06.88 Patentblatt 88/26**

(45) Bekanntmachung des Hinweises auf die Patenterteilung:
**15.05.91 Patentblatt 91/20**

(84) Benannte Vertragsstaaten:
**DE FR GB IT**

(56) Entgegenhaltungen:
EP-A- 0 197 172   DE-A- 1 463 646
DE-A- 2 436 799   DE-A- 2 909 018
FR-A- 1 566 874   GB-A- 2 097 154
US-A- 3 754 487

(73) Patentinhaber: **Wilhelm Hegenscheidt Gesellschaft mbH**
**Neusser Strasse 3**
**W-5140 Erkelenz(DE)**

(72) Erfinder: **Wittkopp, Helmut, Dipl.-Ing.**
**Cusanushof 87**
**W-5140 Erkelenz(DE)**
Erfinder: **Klosterhalfen, Hartwig, Dipl.-Ing.**
**Am Weinberg 7**
**W-5160 Düren(DE)**
Erfinder: **Kluge, Gerhardt**
**Regewidisstrasse 8**
**W-5132 Ubach-Palenberg(DE)**

(74) Vertreter: **Liermann, Manfred**
**Schillingsstrasse 335**
**W-5160 Düren(DE)**

## Beschreibung

Die Erfindung betrifft ein Verfahren zur Beeinflussung der Bewegung mindestens eines beweglichen Organs, insbesondere eines Werkzeugträgers an Werkzeugmaschinen, mit vom Werkstückdurchmesser abhängiger Werkstückdrehzahl, insbesondere Radsatzdrehmaschinen sowie Radsatzachsen-, Dreh- und Glattwalzmaschinen.

Bei den o.gen. Maschinen besteht das Problem, daß wegen der besonderen Konstruktion des Werkstückantriebs zwar die Werkstückumfangsgeschwindigkeit und damit in der Regel auch die Schnittgeschwindigkeit während der Bearbeitung bekannt ist, nicht aber die Werkstückdrehzahl. Um trotzdem eine Vorschubgröße des Werkzeuges pro Umdrehung des Werkstückes zu erhalten, wird nach der DE-AS 24 21 653 bei solchen Maschinen vorgeschlagen, über eine Werkstückdurchmessererfassungseinrichtung die von Vorschubgeschwindigkeitseinstellgliedern ausgehende Steuer- bzw. Führungsgröße für die Vorschubgeschwindigkeit zu verändern. Hierdurch gelingt es mit ausreichender Genauigkeit die bisherige Werkzeugvorschubgröße, die in Weg pro Zeit eingestellt wurde, nunmehr in Weg pro Werkstückumdrehung einzustellen. Mit der Werkstückbearbeitung ändert sich jedoch der Werkstückdurchmesser und damit auch die Werkstückdrehzahl durch die die ursprünglich eingestellte Vorschubgeschwindigkeit nicht mehr genau stimmt. Nach der Lehre der genannten DE-AS ist es nicht möglich, ganz allgemein bestimmte Bewegungsabläufe in vorbestimmbarer Weise mit der Drehzahl des Werkstückes auch für den Fall einer Drehzahländerung des Werkstückes während der Bearbeitung zu synchronisieren.

Ganz allgemein sind Einrichtungen und Verfahren, die ein bewegliches Organ einer Werkzeugmaschine, beispielsweise ein Drehwerkzeug, oder die ein Drehwerkzeug tragenden Schlitten mit der Drehzahl des Werkstückes synchronisieren bekannt, z. B. durch die europäische Veröffentlichung EP-A-O 197 172. Bei diesen Einrichtungen wird jedoch vorausgesetzt, daß die Drehzahl des Werkstückes bekannt ist. Genau dies aber ist bei den Maschinen der eingangs beschriebenen Art nicht der Fall.

Der Erfindung liegt damit die Aufgabe zugrunde, ein Verfahren der eingangs beschriebenen Art vorzuschlagen, mit dem es möglich wird, eine Synchronisation der Bewegung mindestens eines beweglichen Organs der genannten Maschinen, z. B. eines Werkzeuges, oder Werkzeugträgers mit der Drehzahl des Werkstückes zu erreichen. Eine weitere Aufgabe der Erfindung liegt darin, eine Einrichtung zur Durchführung des Verfahrens vorzuschlagen.

Verfahrensmäßig ist diese Aufgabe dadurch gelöst, daß während der überwiegenden Zeit der Bearbeitung des Werkstückes der Zeitbedarf je Umdrehung des Werkstückes ermittelt und als Bezugsgröße für die Beeinflussung der Bewegung eines beweglichen Organs, insbesondere eines Werkzeugträgers, verwendet wird. Durch die Ermittlung des Zeitbedarfs für eine Umdrehung, die vorzugsweise fortlaufend durchgeführt wird, liegt in direkter Messung ein Wert vor, der von einer Steuerung unmittelbar ohne Berechnung von Zwischenergebnissen verwertet werden kann. Soll z. B. ein Werkzeug in seiner Vorschubgeschwindigkeit auf die Umdrehung des Werkstücks bezogen und damit hierzu synchronisiert werden, so können mit der Zeitangabe der Zeit, die für eine Umdrehung des Werkstücks benötigt wird, die entsprechenden Stellorgane direkt so geregelt werden, daß innerhalb dieser Zeit an der gewünschten Stelle der geforderte Weg zurückgelegt wird.

Ebenso ist es nunmehr möglich, eine Schwingbewegung eines Werkzeugs zur Erzielung eines Spanbruches so, wie in der genannten europäischen Veröffentlichung Nr. 197 172 beschrieben, nunmehr auch bei solchen Maschinen anzuwenden, bei denen die Werkstückdrehzahl vom Werkstückdurchmesser abhängig ist, wie z.B. Radsatzunterflurdrehmaschinen. Damit ist die Möglichkeit einen kontrollierten, erzwungenen Spanbruch bei der zerspanenden Bearbeitung von Radsätzen zu erreichen nicht mehr beschränkt auf Maschinen, bei denen das Werkstück zwischen Spitzen aufgenommen ist und über ein Spannfutter mit bekannter Drehzahl angetrieben wird. Durch die fortlaufende Kontrolle des Zeitbedarfs für eine Umdrehung erfolgt auch ein rasche Anpassung an Veränderungen der Werkstückdrehzahl, wie sie z. B. bei Unterflurradsatzdrehmaschinen, bei denen der Radsatz über Reibrollen angetrieben wird, typisch sind. Es ist sogar möglich, sich zur Durchführung des Verfahrens weitgehend der Einrichtungen zu bedienen, wie sie in der genannten europäischen Veröffentlichung beschrieben sind. Es muß lediglich an der Stelle der dort jeweils beschriebenen Einrichtung und Schaltung eine Anpassung vorgenommen werden, an der die Information über die Werkstückdrehzahl eingegeben wird.

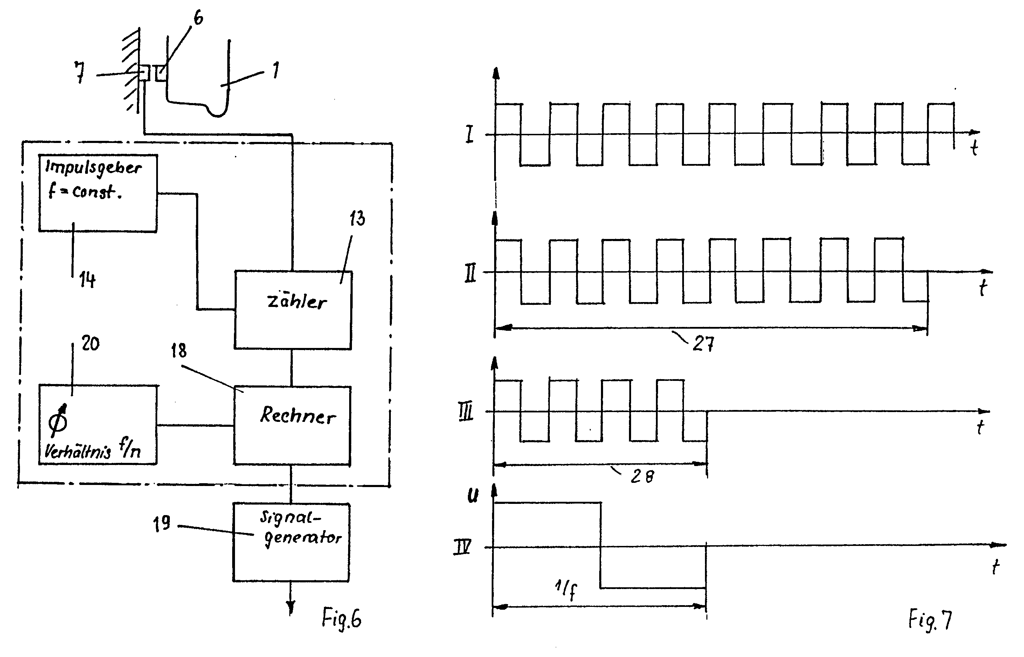

Eine Vorrichtung zur Durchführung des erfindungsgemäßen Verfahrens weist Mittel zur Erfassung des Zeitbedarfs für eine Umdrehung des Werkstücks auf, die mit mindestens einer Einrichtung zur Beeinflussung der Bewegung mindestens eines beweglichen Organs zusammenarbeiten, derart, daß die genannte Beeinfluusung in Abhängigkeit vom ermittelten Zeitbedarf pro Umdrehung des Werstücks erfolgt. Mit den genannten Mitteln wird der Zeitbedar für eine Umdrehung des Werstückes erfaßt und als eine in geeigneter Weise aufbereitete Information an eine weitere Einrichtung weitergegeben, die über geeignete Mittel die Bewegung des zu synchronisierenden Teiles in Abhängigkeit von dem erhaltenen Signal beeinflußt. Ändert sich das erhaltene Signal, ändert sich auch die Beeinflussung. Durch diese Einrichtung kann wieder eine direkte Schnittstelle zu Einrichtungen nach der zitierten europäischen Veröffentlichung geschaffen werden. So ist es z. B. möglich, den ermittelten Zeitbedarf pro einzelner Umdrehung des Werkstükkes als Analogsignal auszugeben, (z. B. je kürzer der Zeitbedarf um so höher die Ausgangsspannung) und mit diesem Analogsignal einen Elektromotor in seiner Drehzahl zu steuern, der seinerseits beispielsweise zur Anpassung der Drehzahl ein Schneckengetriebe antreiben kann, deren Ausgangswelle der Welle 39 in Figur 6 der genannten europäischen Veröffentlichung entspricht. Da auch z. B. bie Unterflurradsatzdrehmaschinen ein Bearbeitungswerkzeug von den gleichen Einrichtungen getragen und bewegt wird, die auch in der genannten europäischen Veröffentlichung beschrieben sind, können zur Erzwingung eines Spanbruchs auch die gleichen Steuermittel und Steuersignale verwendet werden. Für den speziellen Fall der Erzwingung des Spanbruchs durch zur Drehzahl des Werkstücks synchronisierte Bewegung des Werkzeugs ist die mindestens teilweise Mitverwendung der in der europäischen Veröffentlichung 197 172 offenbarten Einrichtungen dann als möglich erkennbar, wenn in der erfindungsgemäßen Weise in direkter Messung der Zeitbedarf einer Werkstückumdrehung fortlaufend ermittelt wird. Der Rückschluß auf den Zeitbedarf für eine Werkstückumdrehung aus einer vorhergehenden Durchmesserbestimmung des Werstückes, wie dies nach der DE-AS 24 21 653 vorgeschlagen wird, macht die Einbeziehung der Einrichtungen nach der europäischen Veröffentlichung 197 172 nicht möglich.

Nach einer Ausgestaltung der Erfindung ist vorgeschlagen, mindestens einen Impulsgeber mit konstanter Impulsfrequenz vorzusehen, der mit mindestens einem Zähler verbunden ist, der die Anzahl der ankommenden Impulse zählt, wobei der Zähler mit Mitteln zur Erfassung des Anfanges und des Endes einer Werkstückumdrehung verbunden ist und wobei der Zähler über Auswerteeinrichtungen mit mindestens einer Einrichtung zur Beeinflussung der Bewegung mindestens eines beweglichen Organs zusammenarbeitet. Durch einen Zähler mit konstanter Impulsfrequenz, der mit einer Einrichtung zusammenarbeitet, die Anfang und Ende einer Werkstückumdrehung erfaßt, kann die dazwischenliegende Zeit inbesondere dann, wenn die Frequenz des Impulsgebers hoch ist, in kleine Zeitteilintervalle aufgeteilt werden. Hierdurch wird es einfach möglich, eine Synchronisation zu einem anderen bewegten Bauteil zu schaffen, wenn eine sich periodisch wiederholende Bewegung innerhalb des Zeitraumes einer Umdrehung und in Abhängigkeit von diesem Zeitraum erreicht werden soll. So ist es z. B. bei der Erzwingung von Spanbruch möglich, eine bestimmte notwendige Anzahl von Halbschwingungen des Werkzeuges während einer Umdrehung des Werkstückes zu erzeugen.

Es ist schließlich nach der Erfindung noch vorgeschlagen, daß als Mittel zur Erfassung des Anfanges und des Endes einer Werkstückumdrehung ein stationär angeordneter, berührungslos arbeitender Enschalter (Häherungsinitiator) vorgesehen ist, der von einer am Werkstück entfernbar angebrachten Magnetmarke betätigt wird. Dies ist insbesondere bei der Anwendung auf Unterflurradsatzbearbeitungsmaschinen ein besonders einfaches Mittel um den Anfang und das Ende einer Umdrehung eines Rades eines Radsatzes zu ermitteln.

Die Erfindung soll nun anhand der beigefügten Zeichnungen, die lediglich Ausführungsbeispiele darstellen, näher erläutert werden.

Es zeigen:

Figur 1:    schematisch Radsatz in Seitenansicht mit Achslagerabstützung, Antriebsrollen und Bearbeitungswerkzeug

Figur 2:    Ansicht in Richtung des Pfeils A nach Figur 1

Figur 3:    Einzelheit X nach Figur 2

Figur 4a:   Darstellung wie Figur 3, jedoch Werkstück in der Übergangsphase während der Reprofilierung

Figur 4b:   Darstellung wie Figur 3, jedoch Werkstück nach der Übergangsphase während der Reprofilierung

Figur 5:    schematischer Grundaufbau der erfindungsgemäßen Einrichtung

Figur 6:    schematischer Grundaufbau der erfindungsgemäßen Einrichtung in erweiterter Form

Figur 7:    schematische Darstellung des Signalverlaufs verschiedener Signale

Figur 8     schematischer Grundaufbau der erfindungsgemäßen Einrichtung in erweiterter Form

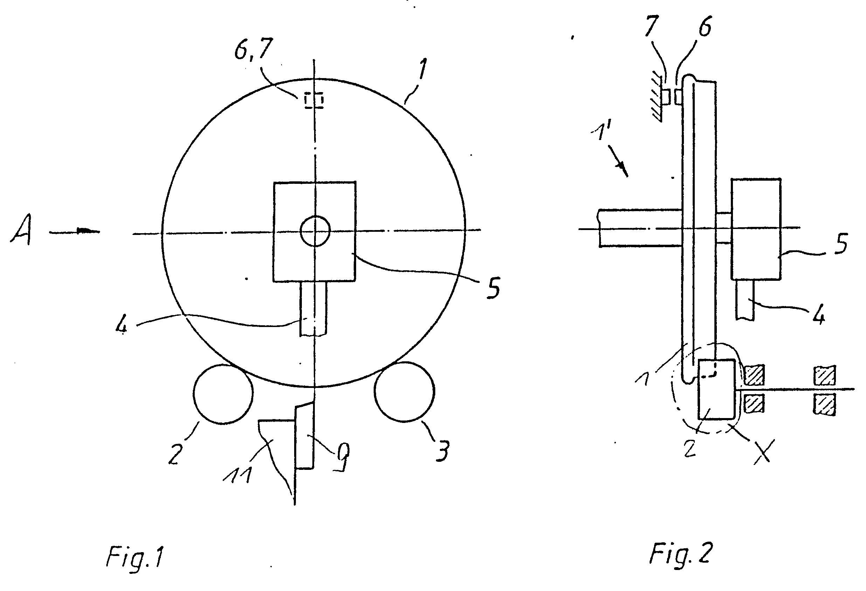

Nach den Figuren 1 und 2 ist ein Radsatz 1' in einer Unterflurradsatzdrehmaschine aufgenommen, abgestützt und angetrieben. Da eine solche Einrichtung aus zwei spiegelbildlich gleichen Hälften besteht, ist der schematische Aufbau nur einseitig dargestellt. Hierbei ist ein Rad 1 eines Radsatzes 1' an seinem Lagerkasten 5 in einer nicht näher dargestellten Unterflurradsatzdrehmaschine über Stützen 4 abgestützt. Die Stützen 4 können sich hierbei beispielsweise am nicht näher dargestellten Ständer der genannten Unterflurradsatzdrehmaschine abstützen.

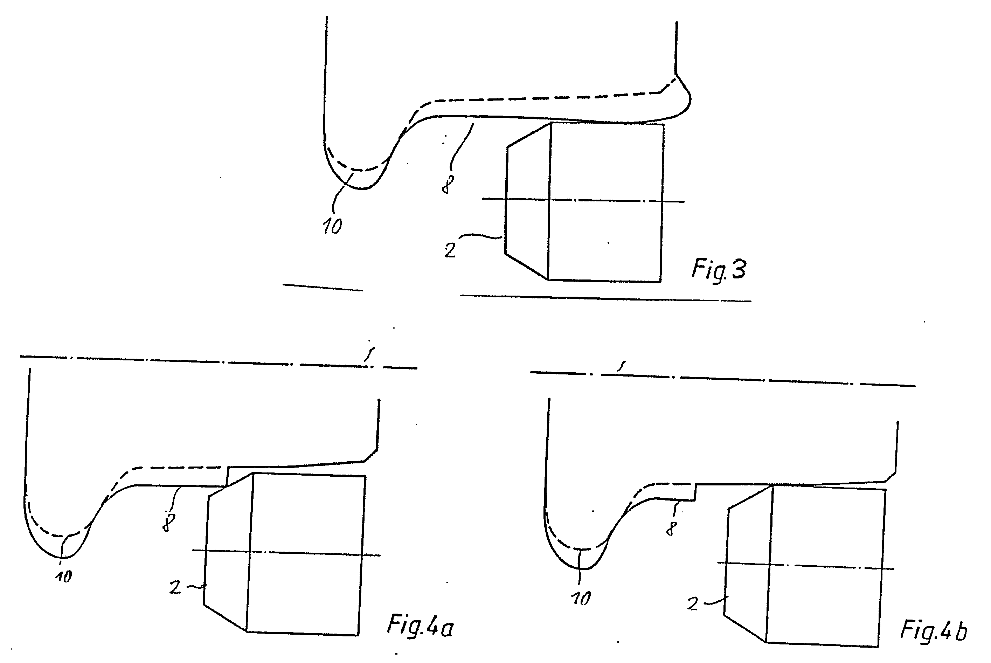

An die Lauffläche des Rades sind in einer Anordnung nach Figur 1 zwei Antriebsreibrollen 2 und 3 mit einer für die Übertragung eines ausreichenden Drehmomentes notwendigen Radialkraft angepreßt. Der Aufbau solcher Unterflurradsatzdrehmaschinen und die Anordnung und Anpressung sowie der Antrieb der Antriebsrollen 2 und 3 sind im Stand der Technik bekannt. Eine vergrößerte Darstellung der Anordnung der Reibrolle 2 am Rad 1 zeigt Figur 3. Das Radprofil des Rades 1 ist hier verschlissene, so daß ein verschlissenes Profil 8 vorliegt. Dieses verschlissene Profil 8 soll durch Reprofilierung erneuert werden, so daß nach Durchführung der Reprofilierung ein reprofiliertes korrektes Profil 10 vorliegt, das durch die gestrichelte Linie angedeutet ist.

Die Antriebsreibrolle ist an dem dem Spurkranz zugewandten Ende kegelstumpfförmig verjüngt. Diese Verjüngung ist, wie im Stand der Technik ebenfalls bekannt ist, erforderlich, um mit fortschreitender Reprofilierung zur Erzeugung des korrekten Profils 10 eine Übergabe der Flächen zu bewirken, mit der die Antriebsreibrolle im Laufflächenbereich des Rades 1 am Rad anliegt. Mit fortschreitender Reprofilierung entsteht eine Übergangssituation wie in Figur a dargestellt. Da die Drehzahl der Antriebsreibrolle konstant ist, wird in dieser Situation die Umfangsgeschwindigkeit am Berührungspunkt zwischen Antriebsreibrolle und Umfangsfläche des Rades immer geringer, so daß die Zeit für eine Umdrehung des Rades zunimmt. Mit fortschreitender Bearbeitung ändert sich dies wieder. Bevor nämlich der Berührungspunkt zwischen Rad 1 und kegeligem Teil der Antriebsreibrolle 2 nach Figur a diesen kegeligen Teil mit fortschreitender Bearbeitung verlassen hat, kommt nämlich der übrige Teil der Antriebsreibrolle 2 zur Anlage an der Lauffläche des Rades 1 im frisch reprofilierten Bereich, so wie dies in Figur 4b dargestellt ist. Hierdurch aber erhöht sich wieder die Umfangsgeschwigdigkeit des Rades, so baß der Zeitbedarf pro Umdrehung des Rades sich wieder verkürzt. Diese Vorgänge sind jedoch alle im Stand der Technik bekannt.

Bei den Maschinen der beschrieben Art ist bei konstanter Drehzahl der Antriebsrolle die Werkstückdrehzahl während der Bearbeitung wechselnd und darüber hinaus von Werkstück zu Werkstück bei wechselndem Durchmesser des Werstückes ebenfalls wechselnd. Sie ist aber nicht nur wechselnd, sondern auch unbekannt. Eine vorherige Durchmesserbestimmung des Werkstückes, wie nach der DE-AS 24 21 653 vorgeschlagen, löst dieses Problem nicht, weil während der Bearbeitung der Durchmesser des Werkstückes sich ändert. Der neue Durchmesser ist bei solchen Werkstücken ebenfalls unbekannt und wird erst nach der zerspanenden Bearbeitung ermittelt. Ist es erforderlich bestimmte Bewegungsabläufe der das Werkstück bearbeitenden Maschine sehr genau auf den jeweiligen Zeitbedarf für eine Umdrehung des Werkstückes abzustimmen, also hiermit zu synchronisieren, so reicht die Methode der vorherigen Durchmesserbestimmung zur ungefähren Ermittlung der Werkstückdrehzahl nicht aus.

Eine Synchronisierung als solche bei bekanntem Zeitbedarf des Werkstückes für eine Umdrehung ist mit der europäischen Veröffentlichung 197 172 bekannt geworden. Sie kann auf Maschinen der eingangs beschriebenen Art, also beispielsweise auf Unterflurradsatzdrehmaschinen, nicht angewandt werden, weil der Zeitbedarf für eine Werkstückumdrehung während der Bearbeitung des Werkstückes nicht bekannt ist. Eine Möglichkeit zur Anwendung der Lehre nach der DE-AS 24 21 653 ist nicht erkennbar.

Um eine Synchronisation beweglicher und angetriebener Elemente, wie z. B. ein Zerspanungswerkzeug in seiner Vorschubbewegung zu erreichen, muß der Zeitbedarf für eine Umdrehung des Werkstückes ermittelt werden, da ja zwischen der Drehzahl der Antriebsrollen 2 und 3 und der Drehzahl des davon angetriebenen Werkstückes keine bekannte Beziehung besteht.

Um den Zeitbedarf für eine Umdrehung feststellen zu können, ist ein Impulsgeber 14 vorgesehen, der Impulse von bekannter und konstanter Frequenz abgibt. Diese Impulse werden auf einen Zähler 13 geleitet, der die Anzahl der eingehenden Impulse zählt. Hierbei bedeutet dann jeder einzelne eingehende Impuls eine bestimmte kleine Zeiteinheit. Je höher die konstante Frequenz des Impulsgebers is, um so kleiner ist die jeweilige Zeiteinheit eines Einzelimpulses.

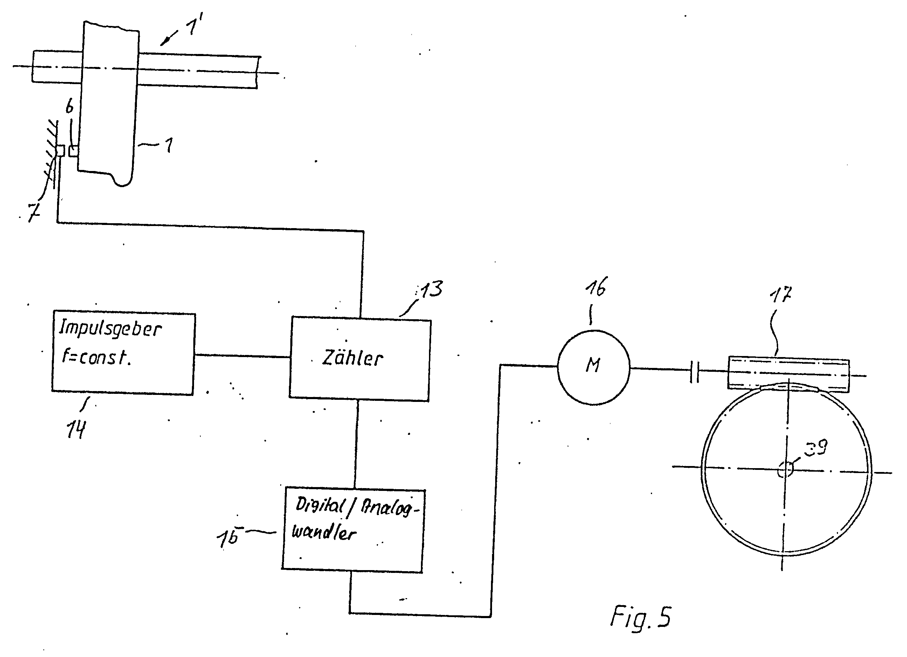

Damit für die Anzahl der eingehenden Impulse ein Zählbeginn und ein Zählende festgelegt werden kann, wobei der Zwischenraum zwischen Zählbeginn und Zählende die Dauer einer Werstückumdrehung darstellen soll, ist ein Schalter 7 vorgesehen, der als Näherungsinitiator ausgebildet sein kann. Dieser Schalter 7 wird in der Nähe einer Umlauflinie des Werstückes angebracht. So kann er beispielsweise in der Nähe der äußeren Stirnseite eines Rades eines Radsatzes 1' angebracht sein. An der entsprechenden Umlauflinie an der Stirnseite des Rades 1 kann dann ein Initiator 6 in Form eines kleinen Dauermagneten angesetzt werden. Sobald dieser kleine Dauermagnet 6 den Näherungsinitiator während der Umdrehung des Rades 1 passiert, wird der Zähler 13 durch die Schaltung des Näherungsinitiators 7 angewiesen, die vom Impulsgeber 14 ankommenden Impulse zu zählen. Nach einer Umdrehung des Rades 1 passiert der Dauermagnet 6 wiederum den Näherungsinitiator 7 und es erhält hierdurch der Zähler 13 das Komando, die bis dahin gezählten Impulse des Impulsgebers 14 weiterzuleiten, entweder an einen Digital/Analogwandler 15, Figur 5 oder an einen Rechner 18 (Figur 6), je nach Art des Schaltungsaufbaus. Gleichzeitig wird der Zähler angewiesen, die nach der letztgenannten Schaltung ankommenden Impulse des Impulsgebers 14 wiederum zu zählen. Dieser Vorgang wiederholt sich fortlaufend, so daß ständig die Anzahl der Impulse, die während einer Umdrehung des Rades 1 beim Zähler 13 einlaufen, ermittelt und weitergeleitet werden.

Im Ausführungsbeispiel nach Figur 5 leitet der Zähler 13 sein Arbeitsergebnis dem Digital/Analogwandler 15 zu, der über eine zu den vom Zähler 13 ankommenden Signalen analoge Ausgangsgröße, beispielsweise eine Steuerspannung erzeugt. Mit dieser Steuerspannung kann die Drehzahl eines Motors 16 gesteuert werden, der damit synchron zu rDrehzahl des Rades 1 läuft. Motor 16 kann ein Untersetzungsgetriebe 17, beispielsweise in Form eines Schneckengetriebes, antreiben, so daß die Abtriebswelle 39 des Schneckengetriebes 17 in ihrer Drehzahl wiederum synchron zur Drehzahl des Rades 1 ist. Da nun die Synchronisation bereits hergestellt ist, ist es möglich, mit der zur Drehzahl des Rades 1 synchron laufenden Welle 39 beispielsweise einen Werkzeugträger 11 mit einem darauf angeordneten Werzeug 9 so zu beeinflussen, daß die Bewegung des Werkzeugträgers 11 in irgendeiner gewünschten Weise synchron ist zur Drehzahl der Welle 39. Es kann dies beispielsweise die Vorschubgeschwindigkeit, mit der das Werkzeug 9 vom Werkzeugträger 11 bewegt wird, sein. Hierdurch kann also beispielsweise ein bestimmter Vorschubweg pro Umdrehung des Rades 1 eingehalten werden. Es ist dann die Vorschubgeschwindigkeit des Werkzeuges 9 synchron zur Drehzahl des Rades 1. Es ist aber auch möglich, andere oder auch zusätzliche Bewegungen des Werkzeugträgers 11 und des Werkzeuges 9 mit der Drehzahl des Rades 1 zu synchronisieren. So kann beispielsweise das Werkzeug 9 über seinen Werkzeugträger 11 veranlaßt werden, neben der Vorschubbewegung zusätzlich auch eine Schwingbewegung durchzuführen, wie sie beispielsweise in der europäischen Veröffentlichung 197 172 beschrieben ist. Hierzu wäre es nur erforderlich, die Welle 39 nach Figur 5 mit der Schalttrommel nach Figur 6 der genannten europäischen Veröffentlichung zu verbinden. In Figur 6 der genannten europäischen Veröffentlichung ist diese Welle ebenfalls mit dem Bezugzeichen 39 versehen. Ist eine solche Verbindung hergestellt, so ist es ohne weiteres möglich, den übrigen in der genannten europäischen Veröffentlichung offenbarten und beschriebenen apparativen Aufbau zur Steuerung einer gewünschten Bewegung des Werkzeuges 9 und des Werkzeugträgers 11 zu verwenden.

Es sei darauf hingewiesen, daß bei einem Schaltungsaufbau nach Figur 5 darauf geachtet werden muß, daß eine sinnrichtige Synchronisation erfolgt. Wenn z. B. eine große Anzahl von Impulsen im Zeitraum einer Umdrehung des Rades 1 vom Zähler 13 gezählt und an den Digital/ Analogwandler 15 als Ergebnis weitergegeben wird, so bedeutet dies, daß der Digital/Analogwandler beispielsweise eine entsprechend hohe Spannung abgibt. Wächst also die Anzahl der pro Umdrehung einlaufenden Impulse, so wächst auch die vom Digital/Analogwandler ausgegebene Spannung. Eine größere Anzahl von Impulsen bedeutet jedoch eine nierdrigere Drehzahl des Rades 1. Die steigende Spannung am Digital/Analogwandler muß also beim Motor 16 als Steuerspannung so eingesetzt werden, daß dort eine entsprechende Drehzahlverminderung eintritt, denn es muß ja eine synchrone Verminderung der Drehzahl der Welle 39 des Schneckengetriebes 17 erreicht werden. Dies ist möglich, durch Einsatz eines Analogdividierers, der die vom Digital/Analogwandler abgegebene Spannung so umwandelt, daß bei langsamer Umdrehung des Rades 1 eine niedrige Steuerspannung an den Motor 16 gegeben wird und umgekehrt.

Ein gegenüber dem Ausführungsbeispiel nach Figur 5 etwas veränderter Aufbau ist gezeigt in Figur 6. Auch dort wird der Zeitabschnitt für eine Umdrehung des Rades 1 wieder markiert über den Nährungsinitiator 7 mit dem am Rad 1 angebrachten Dauermagneten 6. Es wird auch im Ausführungsbeispiel nach Figur 6 der Zähler aktiviert vom Schalter 7 und es ist weiter der Zähler 13 wieder verbunden mit dem Impulsgeber 14, der eine Impulsfolge konstanter Frequenz dem Zähler 13 zuführt. Die Ergebnisse des Zählers 13 werden jedoch einem Rechner 18 zugeleitet, der seinerseits noch mit einer Eingabestation 20 verbunden ist. An diese Eingabestation kann in den Rechner 18 eingegeben werden, wie oft sich irgendein bestimmtes Geschehnis, also beispielsweise eine Schwingung des Werkzeugs 9 und/oder das Durchlaufen eines bestimmten Vorschubweges des Werkzeugs 9 innerhalb der Zeitdauer einer Umdrehung des Werkstücks 1 wiederholen soll. Der Rechner 18 gibt dann ein dieses Verhältnis und die vom Zähler 13 ankommenden Zählimpulse berücksichtigendes Ergebnis an den Signalgenerator 19, so daß dieser in Abhängigkeit von den vom Rechner ankommenden Informationen seinerseits das notwendige Signal für die gewünschte Steuerung eines zu bewegenden Teiles abgeben kann. Hierbei ist es wiederum möglich, den Ausgangs des Signalgenerators 19 bei einer Schaltung nach Figur 18 der europäischen Veröffentlichung 197 172 zu verwenden. Bei Figur 18 nach dieser europäischen Veröffentlichung muß lediglich der Frequenzgenerator 134 und das Schaltgetrieve 48 entfernt und statt dessen der Signalgenerator 19 nach Figur 6 der hier beschriebenen Erfindung eingesetzt werden. Der restliche, in der genannten europäischen Veröffentlichung beschriebene Aufbau kann dann wieder übernommen werden.

Ein Zusammenhang zwischen den einzelnen Impulsen bzw. Signalen zeigt Figur 7. Dort ist unter der Bezeichnung I die fortlaufende konstante Frequenz des Impulsgebers 14 dargestellt. In der Darstellung nach II in Figur 7 ist mit der Strecke 27 die Anzahl der Impulse des Impulsgebers 14 für eine Umdrehung des Werkstückes I angegeben. In der Darstellung nach III ist das Ergebnis einer Verrechnung der Gesamtimpulszahl wiedergegeben. Die Strecke 28 entspricht hierbei der Dauer des späteren gewünschten Signals. Hierzu ist in der Darstellung nach IV das Ausgangssignal des Signalgenerators 19 dargestellt. Hierbei machen es die Impulse möglich, die Nulldurchgänge des Signals genau festzulegen.

In der Darstellung nach Figur 7 ist eine Rechteckform des Signals gewählt. Grundsätzlich ist es jedoch auch möglich, beliebige Signalformen zu erzeugen und zu verwenden.

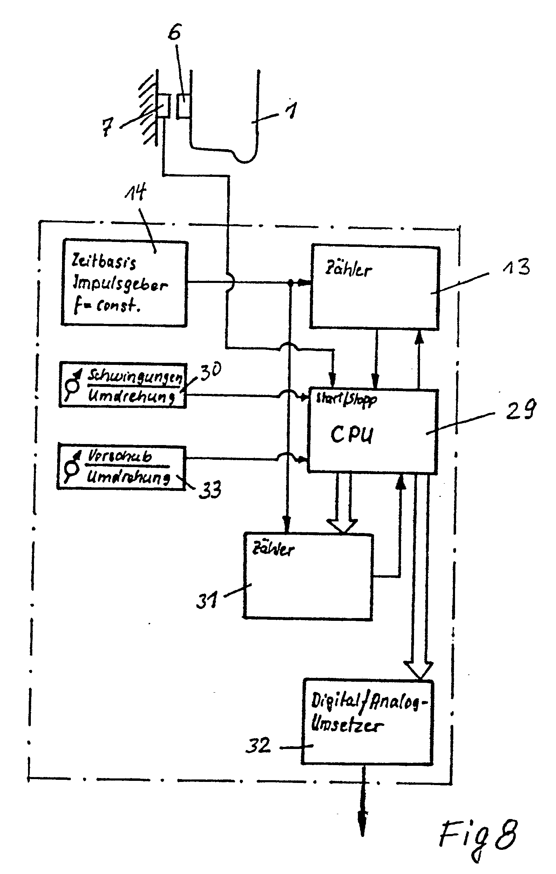

Ein gegenüber Figur 5 oder 6 geänderter Aufbau wird in Figur 8 gezeigt. Auch dort wird ein Zeitabschnitt für eine Umdrehung des Rades 1 wieder markiert über den Näherungsinitiator 7 mit dem am Rad 1 angebrachten Dauermagneten 6. Start und Stopp/Start werden vom Näherungsinitiator 7 an die CPU 29 gegeben. Der Zähler 13 zählt laufend die vom Impulsgeber 14 ankommenden Impulse. Die CPU 29 erhält vom Näherungsinitiator 7 einen Startbefehl und setzt eine Zeitmarke. Wenn über den Näherungsinitiator 7 die vollendete Radumdrehung des Rades 1 mit Stopp/Start an die CPU 29 gemeldet wird, wetzt die CPU 29 wiederum eine Zeitmarke und liest die zwischen den beiden Zeitmarken gezählte Anzahl der Impulse. Da Stopp/Start zusammenfallen, zählt der Zähler 13 ohne Unterbrechung weiter. Dieser Vorgang wiederholt sich fortlaufend, so daß ständig die Anzahl der Impulse, die während einer Umdrehung des Rades 1 beim Zähler 13 einlaufen, ermittelt werden. Soll eine Synchronisation eines Werkzeugs 9, bzw. eines Werkzeugträgers 11 als Schwingbewegung des Werkzeugs 9 erreicht werden, dividiert die CPU 29 die Anzahl der ausgelesenen Impulse pro Radumdrehung des Rades 1 durch die gewünschte und am Stellglied 30 eingegebene Anzahl von Halbschwingungen pro Radumdrehung des Rades 1. Dieser errechnete Wert wird von der CPU 29 an einen zweiten Zähler 31 als Sollwert gegeben. Dieser Zähler 31 benutzt diesen Sollwert bei der nachfolgenden Radumdrehung des Rades 1 derart, daß die vom Impulsgeber 14 direkt an den Zähler 31 gegebenen Impulse gezählt und zugleich mit dem Sollwert verglichen werden . Wenn die Anzahl der vom Zähler 31 gezählten Impulse mit dem Sollwert übereinstimmt, gibt der Zähler 31 eine Meldung an die CPU 20. In Form eines digitalen Befehls wird von der CPU 29 eine Information an den Digital/Analogumsetzer 32 (DAU) gegeben, der aus dieser Information eine analoge Spannung erzeugt, die entsprechend einer vorhergegangenen Festlegung positiv oder negativ ist. Der Zähler 31 zählt sofort nach Meldung an die CPU 29 die weiter ankommenden Impulse und vergleicht den Sollwert mit dem Istwert. Sobald der Istwert den Sollwert erreicht hat, wird wieder eine Meldung an die CPU 29 gegeben, die dann erneut ein Information in Form eines digitalen Befehls an den Digital/Analogumsetzer 32 gibt, der aus dieser Information ebenfalls eine analoge Spannung erzeugt, die dann z.B. positiv ist, wenn die vorher abgegebene Spannung in Relation zu einer Bezugsspannung negativ war. Dieser Vorgang wiederholt sich, bis eine Radumdrehung des Rades 1 abgeschlossen ist. Der Zylus wiederholt sich dann. Falls sich die Drehzahl ändert, wird die Änderung von Zähler 13 zusammen mit der CPU 29 festgestellt und die CPU 29 gibt einen neuen Sollwert an den Zähler 31.

Soll ein Werkzeugträger 11 ohne eine Schwingbewegung auszuführen zur Drehzahl des Rades 1 synchromisiert werden, wird die Eingabe "Schwingungen pro Umdrehung" mit Stellglied 30 auf Null gestellt. Damit wird über die CPU 29 der Zähler 31 neutralisiert und die CPU 29 gibt entsprechend der Zählergebnisse des Zählers 13 einen digitalen Befehl an den Digital/Analogumsetzer 32, der dann eine analoge Spannung mit konstantem Vorzeichen abgibt.

Über ein weiteres Eingabeelement 33 ist es möglich den Vorschub pro Umdrehung des Rades 1 an die CPU 29 zu geben.

Liste der verwendeten Bezugzeichen

1 Rad
1′ Radsatz
2 Antriebsreibrolle
3 Antriebsreibrolle
4 Stütze für Lagerkasten
5 Lagerkasten
6 Initiator
7 Schalter
8 verschlissenes Profil
9 bewegliches Organ (Zerspanungswerkzeug)
10 reprofiliertes Profil
11 Werkzeugträger
12 unbenutzt
13 Zähler
14 Impulsgeber

15 Analogwandler
16 Motor
17 Getriebe
18 Rechner
19 Signalgenerator
20 Eingabestation
21-26 unbenutzt
27 Strecke
28 Strecke
29 CPU
30 Stellglied
31 Zähler
32 DAU
33 Eingabeelement
34-38 unbenutzt
39 Welle

**Ansprüche**

1. Verfahren zur Beeinflussung der Bewegung eines beweglichen Organs (9), eines Werkzeugträgers (11), an Werkzeugmaschinen mit vom Werkstückdurchmesser abhängiger Werkstückdrehzahl, insbesondere Radsatzdrehmaschinen sowie Radsatzachsendreh- und -Glattwalzmaschinen, dadurch gekennzeichnet, daß während der überwiegenden Zeit der Bearbeitung des Werkstückes (1) der Zeitbedarf je Umdrehung des Werkstückes (1) ermittelt und als Bezugsgröße für die Beeinflussung der Bewegung des beweglichen Organs (9) des Werkzeugträgers (11) verwendet wird.

2. Einrichtung zur Durchführung des Verfahrens nach Anspruch 1, ausgebildet als Werkzeugmaschine mit mindestens einem in seiner Bewegung beeinflußbaren beweglichen Organ (9), eines Werkzeugträgers (11), bei der die Werkstückdrehzahl vom Werkstückdurchmesser abhängig ist, insbesondere Radsatzdrehmaschinen sowie Radsatzachsendreh- und Glattwalzmaschinen, dadurch gekennzeichnet, daß Mittel (6,7,13,14) zur Erfassung des Zeitbedarfs für eine Umdrehung des Werkstücks (1) vorgesehen sind, die mit mindestens einer Einrichtung zur Beeinflussung der Bewegung des beweglichen Organs (9) zusammenarbeiten, derart, daß die genannte Beeinflussung in Abhängigkeit vom ermittelten Zeitbedarf pro Umdrehung des Werkstücks (1) erfolgt.

3. Einrichtung nach Anspruch 2, gekennzeichnet durch einen Impulsgeber (14) mit konstanter Impulsfrequenz, der mit einem Zähler (13) verbunden ist, der die Anzahl der ankommenden Impulse zählt, wobei der Zähler (13) mit Mitteln (6,7) zur Erfassung des Anfanges und des Endes einer Werkstückumdrehung verbunden ist und wobei der Zähler (13) über Auswerteeinrichtungen (15; 18,19,20) mit einer Einrichtung zur Beeinflussung der Bewegung des beweglichen Organs (9,11) zusammenarbeitet.

4. Einrichtung mindestens nach Anspruch 3, dadurch gekennzeichnet, daß als Mittel zur Erfassung des Anfanges und des Endes einer Werkstückumdrehung ein stationär angeordneter, berührungslos arbeitender Endschalter (7) (Näherungsinitiator) vorgesehen ist, der von einer am Werstück (1) entfernbar angebrachten Magnetmarke (6) betätigt wird.

**Claims**

1. Method of influencing the movement of a movable member (9) of a tool holder (11), on machine tools where the speed of rotation of the workpiece is dependent on the workpiece diameter, especially wheelset turning machines as well as wheelset axle turning machines and smoothing machines, characterised in that during the predominant part of the machining time of the workpiece (1) the time required for each rotation of the workpiece (1) is determined and is used as a reference value to influence the movement of the movable member (9) of the tool holder (11).

2. Apparatus for carrying out the method according to claim 1, constructed as a machine tool with at least one member (9) of a tool holder (1) movable in a manner which can be influenced, wherein the speed of rotation of the workpiece is dependent on the workpiece diameter, especially wheelset turning machines as well as wheelset axle turning machines and smoothing machines, characterised in that means (6, 7, 13, 14) are provided to determine the time required for one rotation of the workpiece (1), said means cooperating with at least one device for influencing the movement of the movable member (9) in such a manner that the said influence is effected in dependence upon the determined required time per revolution of the workpiece (1).

3. Apparatus according to claim 2, characterised by a pulse transmitter (14) of constant pulse frequency, which is connected to a counter (13) which counts the number of incoming pulses, wherein the counter (13) is connected to means (6, 7) for determining the beginning and the end of a workpiece rotation and wherein the counter (13) cooperates by way of evaluation means (15; 18, 19, 20) with a device for influencing the movement of the movable member (9, 11).

4. Apparatus at least according to claim 3, characterised in that a stationary limit switch (7) (proximity detector) operating without contact is provided as means for determining the beginning and the end of a workpiece rotation, said switch being actuated by a magnet index (6) mounted removably on the workpiece (1).

**Revendications**

1. Procédé pour influencer le mouvement d'un organe mobile (9) d'un support d'outil (11) sur des machines-outils où la vitesse de rotation de la pièce à usiner est fonction du diamètre de la pièce à usiner, en particulier sur des tours à train de roues ainsi que des tours à essieux et sur des brunissoirs, caractérisé par le fait que c'est pendant la plus grande partie du temps d'usinage de la pièce (1) que l'on détermine le temps nécessaire pour un tour complet de la pièce (1), temps que l'on emploie comme grandeur de référence pour influencer le mouvement de l'organe mobile (9) du support d'outil (11).

2. Dispositif pour la mise en oeuvre du procédé de la revendication 1, conçu sous forne d'une machine-outil qui présente au moins un organe mobile (9) d'un support d'outil (11), dont le mouvement peut être influencé, et dans laquelle la vitesse de rotation de la pièce est fonction du diamètre de la pièce, en particulier tours à train de roues, ainsi que tours à essieux et brunissoirs, caractérisé par le fait que sont prévus, pour la saisie du temps nécessaire pour un tour complet de la pièce à usiner (1), des moyens (6,7,13,14) qui coopèrent avec au moins un dispositif prévu pour influencer le mouvement de l'organe mobile (9) de façon telle que l'influence mentionnée se fasse en fonction du temps, nécessaire pour un tour complet de la pièce à usiner (1) ainsi déterminé.

3. Dispositif selon la revendication 2, caractérisé par un émetteur d'impulsions (14) à fréquence d'impulsions constante, qui est relié à un compteur (13) qui compte le nombre d'impulsions qui arrivent, étant précisé que le compteur (13) est relié à des moyens (6,7) de saisie du début et de la fin d'un tour complet de la pièce à usiner et que le compteur (13) coopère, par l'intermédiaire de dispositifs de traitement (15,18,19,20), avec un dispositif prévu pour influencer le mouvement de l'organe mobile (9,11).

4. Dispositif selon au moins la revendication 3, caractérisé par le fait que comme moyen de saisie du début et de la fin d'un tour complet de la pièce à usiner, il est prévu un commutateur de la fin de course (7) à commande sans contact (commutateur de proximité) qui est disposé fixe et qui est actionné par un repère magnétique (6) rapporté, de façon amovible, sur la pièce à usiner (1).

Fig.1

Fig.2

Fig.3

Fig.4a

Fig.4b

EP 0 272 345 B1

Fig. 5

EP 0 272 345 B1

Fig.6

Fig.7

Fig 8